Europäisches Patentamt

European Patent Office

Office européen des brevets

(11) Veröffentlichungsnummer: **0 248 188**
**A2**

## (12) EUROPÄISCHE PATENTANMELDUNG

(21) Anmeldenummer: **87105794.9**

(22) Anmeldetag: **18.04.87**

(51) Int. Cl.⁴: **B60C 17/10**

(30) Priorität: **05.06.86 DE 3618998**

(43) Veröffentlichungstag der Anmeldung:
**09.12.87 Patentblatt 87/50**

(84) Benannte Vertragsstaaten:
**AT BE CH DE ES FR GB GR IT LI LU NL SE**

(71) Anmelder: **Continental Gummi-Werke Aktiengesellschaft**
**Königsworther Platz 1 Postfach 169**
**D-3000 Hannover 1(DE)**

(72) Erfinder: **Umland, Henning, Dr.**
**Barwegskoppel 16**
**D-2090 Winsen (Luhe)(DE)**
Erfinder: **Fricke, Gerhard**
**Bärenriegelweg 6**
**D-8491 Lohberg O.T.Lohberghütte(DE)**

(54) Gleitmittel für ein Fahrzeugrad.

(57) Die Erfindung bezieht sich auf ein Gleitmittel für ein Fahrzeugrad zur Verminderung der Reibung zwischen der Reifeninnenwand und der Felge bei einem Pannelauf, das unter anderem Polyglykol und/oder Polyglykoläther enthält.

Um die Reibung zwischen Reifen und Felge zu reduzieren, wird vorgeschlagen, daß das Gleitmittel 80 bis 95 Gew.% Polyglykol und/oder Polyglykoläther und weiterhin 20 bis 5 Gew.% eines organophilen Silikats enthält.

EP 0 248 188 A2

## Gleitmittel für ein Fahrzeugrad

Die Erfindung betrifft ein Gleitmittel für ein Fahrzeugrad zur Verminderung der Reibung zwischen der Reifeninnenwand und der Felge bei einem Pannenlauf, das unter anderem Polyglykol und/oder Polyglykoläther enthält.

In der GB-PS 1 359 467 wird eine ganze Reihe von Stoffen angeführt, die für den Einsatz als Gleitmittel geeignet erscheinen, unter anderem auch Polyglykol. Solche Gleitmittel sollen bekanntlich - schlupfbedingte Schädigungen oder Zerstörungen des Reifens bei einem längeren Fahren ohne Luft verhindern, indem sie die Reibung zwischen der Reifeninnenwand und der Felge oder sonstigen Teilen des Fahrzeugrads bei der Berührung in der Bodenaufstandsfläche verringern und damit einer übermäßigen Wärmeentwicklung entgegentreten.

An solche Gleitmittel für Fahrzeugräder sind unterschiedliche Anforderungen zu stellen. So sollten sie über einen möglichst großen Temperaturbereich eine hohe Viskosität aufweisen. Sie dürfen nicht viel wiegen, um in Rahmen eines energieoptimierten Fahrzeugrads nicht zu stark auf der Negativbilanz zu erscheinen. Weiterhin dürfen sie nicht zu fließfähig sein und müssen genügend stark am Reifen haften, um eine Gleichverteilung des Gleitmittels über den Radumfang auch bei längeren Standzeiten und im Fahrbetrieb zu gewährleisten.

Von den bekannten Gleitmitteln hat sich keines allgemein durchgesetzt, weil bisher nicht erreicht werden konnte, alle Anforderungen gleichzeitig ausreichend zu erfüllen.

Der Erfindung liegt deshalb die Aufgabe zugrunde, ein verbessertes Gleitmittel für solche Fahrzeugräder anzugeben, die für einen sogenannten Pannenlauf geeignet sind.

Diese Aufgabe wird erfindungsgemäß dadurch gelöst, daß das Geleitmittel 80 bis 95 Gew.-% Polyglykol und/oder Polyglykoläther und weiterhin 20 bis 5 Gew.% eines organophilen Silikats enthält.

Das erfindungsgemäße Gleitmittel bietet den Vorteil einer guten Gummiverträglichkeit mit dem Innenseelengummi des Reifens. Es ist langfristig lagerbar, ohne daß dadurch die Gleiteigenschaften schlechter werden. Außerdem sind mit ihm bei einem Pannenlauf eines Fahrzeugrads sehr hohe Kilometerleistungen erzielbar. Das pastenförmige Gleitmittel zeigt ein günstiges rheologisches Verhalten, insbesondere hinsichtlich seiner Vulkanisationseigenschaften.

Das Gleitmittel kann ohne den Einsatz eines Netzmittels hergestellt werden weil in den meisten Fällen die Haftung an dem Innenwandgummi des Reifens ausreichend ist. Bei Bedarf kann jedoch auch ein Netzmittel eingemischt werden, und zwar in einem Anteil bis zu 3 Gew.%. Das Gleitmittel wird auf der Innenwand eines Reifens, insbesondere in ihrem Zenitbereich aufgebracht, unc zwar in einer Schichtdicke, die zwischen 0,1 und 0,8 mm liegt.

Nachfolgend wird die Herstellung des erfindungsgemäßen Gleitmittels näher erläutert. Zunächst liegt als Ausgangsprodukt das flüssige Polyglykol und/oder der flüssige Polyglykoläther vor. In diese Flüssigkeit wird bei Zimmertemperatur ein organophiles Silikat, insbesondere ein hydrophobiertes Schichtsilikat eingerührt. Gemäß einer bevorzugten Ausführungsform setzt sich das Gleitmittel aus 85 Gew.% Polyglykol bzw. Polyglykoläther und 15 Gew.% des hydrophobierten Silikats zusammen. Nach dem Einrühren des Silikats wird die Masse unter Rühren bis auf ca. 100°C erwärmt, um den Quellvorgang einzuleiten. Nach der anschließenden Abkühlung ist das Gleitmittel fertig. Für den Anteil des organophilen Silikats kommen Mengen von 5 - 20 Gew.% in Frage. Wenn man den Zusatz eines Netzmittels wünscht, wird dieses in Mengen von 1 - 3 Gew.% noch vor dem Silikat in das Polyglykol eingerührt. Als Netzmittel kommt ein grenzflächenaktiver Fettalkoholpolyglykoläther oder Fettsäurepolyglykolester in Frage.

Das auf vorstehend beschriebene Weise hergestellte Gleitmittel weist eine pastenförmige Konsistenz und ein äußerst günstiges rheologisches Verhalten auf. Aufgrund des strukturviskosen Verhaltens ergeben sich geringere Scherkräfte, wodurch die Reibung zwischen Reifen und Felge nochmals reduziert sird. Die Temperaturbeständigkeit des Gleitmittels beträgt über 150°C.

Zur Erzielung einer hohen Pannenlaufleistung wird das Gleitmittel zumindest an den Teilen der Reifeninnenwand angebracht, die beim Pannenlauf, d. h. beim Fahren ohne Luftdruck, mit Teilen der Felge in Berührung kommen. Die Gleitmittelschicht kann in einer Dicke zwischen 0,1 und 0,8 mm vorliegen.

**Ansprüche**

1. Gleitmittel für ein Fahrzeugrad zur Verminderung der Reibung zwischen der Reifeninnenwand und der Felge bei einem Pannenlauf, das unter anderem Polyglykol und/oder Polyglykoläther enthält, dadurch gekennzeichnet, daß das Gleitmittel 80 bis 95 Gew.% Polyglykol und/oder Polyglykoläther und weiterhin 20 bis 5 Gew.% eines organophilen Silikats enthält.

2. Gleitmittel nach Anspruch 1, dadurch gekennzeichnet, daß es 0 bis 3 Gew.% eines Netzmittels enthält.

3. Gleitmittel nach Anspruch 2, dadurch gekennzeichnet, daß als Netzmittel ein grenzflächenaktiver Fettalkoholpolyglykoläther oder ein Fettsäurepolyglykolester beigefügt ist.

4. Gleitmittel nach Anspruch 1, dadurch gekennzeichnet, daß es sich auf der Reifeninnenwand, insbesondere in ihrem Zenitbereich befindet.

5. Gleitmittel nach Anspruch 4, gekennzeichnet durch eine Schichtdicke, die zwischen 0,1 und 0,8 mm liegt.